# EUROPEAN PATENT APPLICATION

(11) **EP 3 246 429 A1**
(43) Date of publication of application: **22.11.2017**
(21) Application number: 16170527.2
(22) Date of filing: 20.05.2016
(51) Int. Cl.: C23C 22/46, C23C 22/73, C09D 5/08

(54) **AQUEOUS ZINK PASSIVATION COMPOSITION AND METHOD FOR PASSIVATION OF A ZINC SURFACE USING SUCH A COMPOSITION**

(71) Applicant: Atotech Deutschland GmbH, 10553 Berlin (DE)
(72) Inventor: Karapinar, Ercan, 10553 Berlin (DE); Bedrnik, Lukas, 10553 Berlin (DE)

(57) **Abstract**

The present invention is related to an aqueous zinc passivation composition comprising
i) a chromium (III) ion source
ii) a nitrate ion source
iii) a complexing agent for the chromium (III) ion source, and
iv) a colloidal silicon dioxide particle source;
wherein said aqueous zinc passivation composition is essentially free of cobalt ions.

The present invention is further directed to a method for passivation of a zinc surface using such an aqueous zinc passivation composition and to a metallic device element having at least a zinc surface, which has been passivated by such a method for passivation of a zinc surface.

## Description

### Field of the Invention

The present invention relates to an aqueous zinc passivation composition, a method for passivation of a zinc surface using such an aqueous zinc passivation composition, and a metallic device element having at least a zinc surface, which has been passivated by such a method for passivation of a zinc surface making use of such an aqueous zinc passivation composition.

### Background of the Invention

In the field of corrosion protection exists since a long time a need for a good passivation layer on the top of a specific metallic surface, such as a zinc surface, which should fulfill many industrial requirements, such as of the automotive industry. There is on one hand the requirement for such passivation layers that they should serve as corrosion inhibiting or corrosion protection layer for the metallic surface underneath. On the other hand there are very often also optical demands to fulfill by such passivation layers. The automotive industry par example requests not only passivation layers with good corrosion protection properties, but also passivation layers, which have an attractive optical appearance in such a way that they shiny with good brightness properties such as iridescent appearance. A dark or even worse a black surface shall be avoided for such metallic, preferably iridescent, parts.

Originally one of the first historical approaches to solve this problem of delivering suitable metallic surface passivation layers, which show good corrosion properties and at the same time have a good optical appearance, have been based on chromium (VI) based passivation compositions called chromates.

In the meantime, the world market and the industry have been decided and agreed among each other that the application of chromium (VI) will be or is already forbidden to use.

Consequently, a chromium (VI) free alternative has been searched for afterwards. It had been found by making use of chromium (III) based solutions, which additionally comprise cobalt ions because chromium (III) is not as good as chromium (VI) regarding the above-cited industrial requirements of passivation compositions and layers produced thereof. Such passivation layers generated by such chromium (III) and cobalt containing passivation solutions are still present in the market and deliver successful good corrosion protection results for this industrial purpose.

In the field of corrosion protection of zinc surfaces, it has been found advantageous to execute a heat treatment process, also known as "baking", of a before generated passivation layer, wherein said passivation layer is annealed at high temperatures for a relatively short time, such as at 210 °C for 6 h. This has been found especially useful for barrel applications for small device elements such as screws, bolts or alike.

Thereby, hydrogen which is produced during the respective process will be removed from the zinc layer and/or the substrate; or at least homogenously distributed in the zinc layer and/or in the substrate by such an annealing process. This phenomenon is well known as hydrogen de-embrittlement baking. This is advantageous because the number of accidents caused by cracking of safety related device elements, such as screws, bolts or alike, due to hydrogen embrittlement. A passivation solution based on chromium (III) alone without cobalt is not suitable for such a "baking" process. Commonly, the device elements having a metallic, such as zinc, surface covered by such a passivation layer change to a dark colored surface, especially to a black or brown colored surface, by the "baking" process defining them as failing the optical appearance demands of the market and the industry. Their corrosion protection is also declined thereby. Up to now, the presence of cobalt is essential for chromium (III) based passivation solution for keeping a sufficient level of corrosion protection and optical appearance, if a "baking" process is intended or required.

A passivation layer based on such a known passivation solution containing chromium (III) and cobalt has been proven to possess a good optical appearance and good corrosion protection properties which are both not becoming worse by such a "baking" process.

However, the market and the industry, especially the automotive industry, have been raised again their demands by attempting to remove cobalt from their passivation solutions due to its toxicity.

Attempts to provide chromium (III) based passivation solutions in the market, which are free of cobalt, have been partially successful, but have been plagued with problems arising from their declined corrosion protection or optical appearance.

Such a decline of corrosion protection or optical appearance properties will not be accepted by the market or the respective industry, in particular by the automotive industry.

Especially, such an above-mentioned "baking" process at high temperatures of a cobalt free passivation solution based on chromium (III) leads to a tremendous decline of the desired corrosion protection properties and in particular of the optical appearance properties of the resulting passivation layer.

### Objective of the present Invention

In view of the prior art, it was thus an object of the present invention to provide an aqueous zinc passivation composition and a method for passivation of a zinc surface using such an aqueous zinc passivation composition, which shall not exhibit the aforementioned shortcomings of the known prior art compositions and methods.

What is needed therefore is a way to ensure good corrosion protection without that the optical appearance will be declined, especially if a so-called "baking" process is conducted.

### Summary of the Invention

These objects and also further objects which are not stated explicitly but are immediately derivable or discernible from the connections discussed herein by way of introduction are achieved by an aqueous zinc passivation composition having all features of claim 1. Appropriate modifications to the inventive aqueous composition are protected in dependent claims thereof. Further, the invention comprises a method for passivation of a zinc surface using such an aqueous zinc passivation composition while appropriate modifications of said inventive method are protected in dependent claims thereof. The invention further comprises a metallic device element having at least a zinc surface, which has been passivated by such a method for passivation of a zinc surface making use of such an aqueous zinc passivation composition.

The present invention accordingly provides an aqueous zinc passivation composition comprising
i) a chromium (III) ion source
ii) a nitrate ion source
iii) a complexing agent for the chromium (III) ion source, and
iv) a colloidal silicon dioxide particle source;
wherein said aqueous zinc passivation composition is essentially free of cobalt ions.

It is thus possible in an unforeseeable manner to provide an aqueous zinc passivation composition and a method for passivation of a zinc surface using such an aqueous zinc passivation composition, which does not exhibit the aforementioned shortcomings of the known prior art compositions and methods.

Additionally, the inventive composition and method of the present invention offers a way to ensure good corrosion protection without that the optical appearance will be declined, especially if a so-called "baking" process is conducted.

### Detailed Description of the Invention

As used herein, the term "essentially free of", when applied to cobalt ions or fluoride ions in accordance with the present invention, refers to a quantity of said ions in the zinc passivation composition of less than 0.01 weight percent. Preferably, the zinc passivation composition is absolutely free of cobalt and fluoride ions. Accordingly the obtained passivated zinc surface will be essentially free of cobalt.

As used herein, the term "aqueous", when applied to the present invention in form of an "aqueous solution" or an "aqueous composition" means a solution or composition, which comprises at least 40% water, preferably at least 70% water, and most preferably at least 90% water.

The presence of a colloidal silicon dioxide particle source in the inventive aqueous zinc passivation composition has to be strictly differentiated from the presence of other silicon sources, such as salts, like ammonium hexafluorosilicates, or hexafluorosilicic acid, which cannot replace the claimed silicon dioxide particle source. If other silicon sources have been tested instead of silicon dioxide particles, the technical effect of the present invention could not be determined. In all such comparative examples, the screws have been become dark colored, especially black or brown colored (unacceptable change of the optical appearance) while also providing declined corrosion protection.

It has been found that the inventive composition and method is unsuitable for a passivation of a zinc nickel alloy surface on a substrate. All experiments done in this context have been led to undesired dark, especially black or brown, discolorations of the respective substrate surfaces, regardless if it has been applied for rack or barrel plating applications.

In one embodiment, the aqueous zinc passivation composition comprises chromium (III) oxalate and/or a mixture of a chromium (III) salt with oxalic acid, preferably chromium (III) nitrate and oxalic acid.

In a preferred embodiment thereof, wherein chromium (III) ions are added in form of chromium (III) nitrate, the chromium (III) nitrate functions both as chromium (III) ion source as well as nitrate ion source. A further nitrate ion source has not to be added then.

In an embodiment, wherein a mixture of chromium (III) salt with oxalic acid is added, the chromium (III) oxalate complex will be formed in the aqueous zinc passivation composition in-situ or subsequently after a short time period.

In all cases wherein oxalic acid or any kind of oxalate is being used, the oxalate functions as complexing agent for the chromium (III) ions. A further complexing agent is then not required.

In one embodiment, the chromium (III) ion concentration in the aqueous zinc passivation composition is ranging from 1 to 50 g/l, preferably from 1.5 to 25 g/l, and more preferably from 1.8 to 12 g/l.

A presence of fluoride ions could cause an undesired precipitation of the chromium (III) ions out of the aqueous zinc passivation composition. Therefore in one embodiment, the aqueous zinc passivation composition is essentially free of fluoride ions.

In one embodiment, the colloidal silicon dioxide particle concentration in the aqueous zinc passivation composition is ranging from 0.5 to 25 g/l, preferably from 1 to 15 g/l, and more preferably from 1.2 to 10 g/l.

A too low concentration of said colloidal silicon dioxide particles lead to a too low corrosion protection while a too high concentration lead to aqueous zinc passivation composition instabilities and undesired discoloration of the achieved passivation layer on the top of the zinc surface.

In one embodiment, the average diameter of the colloidal silicon dioxide particles is ranging from 8 to 35 nm, preferably from 10 to 25 nm, and more preferably from 12 to 21 nm.

In one embodiment, the pH value of the aqueous zinc passivation composition is ranging from 1 to 5, preferably from 1.4 to 4, and more preferably from 1.7 to 2.6.

A too low pH value leads to a too high reaction rate while a too high pH value leads to a too low reaction rate for forming the passivation layer on the top of the zinc surface.

Further, the present invention also relates to a method for passivation of a zinc surface using an aqueous zinc passivation composition according to the present invention above characterized by the following method steps:
i) Providing a substrate having at least on one side a zinc surface,
ii) Providing such an aqueous zinc passivation composition,
iii) Bringing the substrate into contact with said aqueous zinc passivation composition,
iv) Removing the substrate from the aqueous zinc passivation composition,
v) Rinsing the substrate, and
vi) Drying the substrate.

The substrate provided herein for the claimed method for passivation of a zinc surface can be a common steel substrate, which has been coated with zinc, preferably by an electrolytic alkaline or acid zinc deposition process. It is possible that an optional additional zinc layer has been deposited first by a zinc die casting process step.

Method step v) herein is required to avoid any undesired further etching.

Method step vi) is preferably executed for a time period ranging from 1 minute to 2 h at a temperature ranging from 60°C to 105°C, more preferably for a time period ranging from 10 to 60 minutes at a temperature ranging from 65°C to 95°C, and most preferred for a time period ranging from 8 to 30 minutes at a temperature ranging from 75°C to 85°C.

In a preferred embodiment, in method step iii) the substrate is brought into contact with such an aqueous zinc passivation composition for a time period ranging from 30 to 90 s, preferably from 40 to 75 s, and more preferably from 50 to 65 s.

A too short time period for this method step prevents any reaction while a too long time period leads to cracking of the achieved passivation layer on the top of the zinc surface and thereby to undesired bad corrosion protection properties.

In another preferred embodiment, the temperature of the aqueous zinc passivation composition in method step iii) ranges from 20 to 40°C, preferably from 25 to 35°C, and more preferably from 28 to 32°C.

In one embodiment, method step ii) comprises the following method sub-steps:
a) Providing a first aqueous solution comprising
   I) a chromium (III) ion source,
   II) a nitrate ion source,
   III) a complexing agent for the chromium (III) ion source,
b) Providing a second aqueous solution comprising colloidal silicon dioxide particles, and
c) Mixing the first and the second aqueous solution to achieve the aqueous zinc passivation composition.

In this embodiment, it can become necessary in method sub-step a) that the pH value of the first aqueous solution has to be actively buffered by a base, such as sodium hydroxide or potassium hydroxide, in order to avoid that the first aqueous solution becomes too acidic. The application of such a base can also become necessary during method sub-step c) wherein an adjustment of the pH value can become necessary after the second aqueous solution comprising the colloidal silicon dioxide particles have been added.

In a further preferred embodiment thereof, the pH value of the second aqueous solution comprising said colloidal silicon dioxide particles is ranging from 1 to 6.5, preferably from 2 to 5, and more preferably from 3 to 4.

This is advantageous because if the silicon dioxide particles are stabilized in an alkaline aqueous media, it is highly likely that these particles can precipitate out immediately after being mixed with the acidic first aqueous solution. If the second aqueous solution is acidic as well, this risk of precipitation should be minimized or ideally absent. Furthermore, if the second aqueous solution is already acidic, the amount of a buffering base can be minimized due to the more acidic pH value of the acidic second aqueous solution compared to an alkaline second aqueous solution.

In a specific embodiment, the method comprises an additional method step vii.a), which is subsequently following method step vi), wherein the substrate having on the zinc surface a passivation layer additionally receives a top layer based on a sealer.

In an alternative specific embodiment the aqueous zinc passivation composition and the method according to the present invention above is especially appropriated or used for if the obtained passivated zinc surface has to be baken in order to have improved corrosion resistance.

Thereto, the method comprises an additional method step vii.b), which is subsequently following method step vi), wherein a baking step is executed for the substrate having on the zinc surface a passivation layer, wherein the baking step is preferably executed for a time period ranging from 1 h to 30 h at a temperature ranging from 80°C to 250°C, more preferably for a time period ranging from 3 h to 25 h at a temperature ranging from 100°C to 220°C, and most preferred for a time period ranging from 5 h to 10 h at a temperature ranging from 170°C to 220°C.

A too high temperature for this method step vii.b) leads to a loosening of the adhesion of the zinc layer from the underlying substrate. Furthermore cracking and adhesion problems will arise.

The temperature can be constant for the entire time period or different temperature profiles can be executed in order to influence the properties of the achieved passivation layer on the zinc surface.

It has been found that especially two preferred specific conditions deliver remarkable results, namely 24 h at 120°C and 6h at 210°C.

6h at 210°C is much faster, but the risk of generating undesired discoloration of the passivation layer is much higher than using 24 h at 120°C.

The invention is also related to a metallic device element having at least a zinc surface, which has been passivated by such an inventive method for passivation of a zinc surface making use of such an aqueous zinc passivation composition.

Such a required passivation layer which is essentially free of cobalt possesses typically an average thickness of 5 to 20 micrometer, preferably from 6 to 16 micrometer, and more preferably from 7 to 12 micrometer.

The present invention thus addresses the problem of improving corrosion protection while avoiding changes in the optical appearance of the zinc passivation layer, for aqueous compositions and methods, which are essentially cobalt ion free and which are in particular intended to make use of the so-called "baking" process (as claimed in method step vii.b)).

The following non-limiting examples are provided to illustrate an embodiment of the present invention and to facilitate understanding of the invention, but are not intended to limit the scope of the invention, which is defined by the claims appended hereto.

In general, there has to be mentioned, that all experiments, comprising the experiments in accordance with the present invention as well as the comparative experiments outside of the present invention, has been conducted with substrates, which have been pretreated in the following manner before their use for the zinc passivation deposition:
i) Degreasing by soak cleaner
ii) Rinsing
iii) Hydrochloric acid pickling
iv) Rinsing
v) Electrolytic degreasing
vi) Rinsing
vii) Sulfuric acid treatment
viii) Rinsing
ix) Electrolytic zinc deposition
x) Rinsing

Sample substrates have been machine screws made of steel.

The optical appearance of the resulting zinc passivation layer on the zinc surface of the respective substrates has been judged optically.

All results shown in Tables 1 and 2 for optical appearance have been qualitatively ranked having the following synonyms:

| | |
|---|---|
| Good | No change in the optical appearance and no discoloration |
| Bad | Discoloration in form of a dark colored surface, especially black or brown colored surface |

The corrosion protection properties of the achieved zinc passivation layers on the zinc surface have been analyzed by neutral salt spray tests according to ISO 9227. All results shown in Tables 1 and 2 for corrosion protection have been given as a specific number of minimum hours and maximum hours, wherein no white rust arises on the surface of the screws.

The aqueous zinc passivation composition used for the inventive experiments comprises chromium (III) nitrate, oxalic acid, colloidal silicon dioxide particles having an average diameter of 15 nm. The inventive aqueous zinc passivation composition has been free of cobalt ions and fluoride ions. The concentration of the chromium (III) ions in the aqueous zinc passivation composition has been 4 g/l while the colloidal silicon dioxide particle concentration in the aqueous zinc passivation composition has been 3.2 g/l. The pH value of the aqueous zinc passivation composition has been 2.3.

The aqueous zinc passivation composition used for the comparative experiments comprises chromium (III) nitrate, oxalic acid, but no colloidal silicon dioxide particles. The comparative aqueous zinc passivation composition has been also free of cobalt ions and fluoride ions. The concentration of the chromium (III) ions in the aqueous zinc passivation composition has been as well 4 g/l. The pH value of the comparative aqueous zinc passivation composition has also been 2.3.

The method conducted for all experiments shown in the following comprises the following method steps:
i) Providing a substrate having on one side a zinc surface (see also the description of the pretreatment of each substrate as outlined above),
ii) Providing the above-cited inventive aqueous zinc passivation composition for the inventive experiments and providing the above-cited comparative aqueous zinc passivation composition for the comparative experiments,
iii) Bringing a substrate into contact for 60 s with said inventive aqueous zinc passivation composition for an inventive experiment while bringing another substrate into contact for 60 s with said comparative aqueous zinc passivation composition for a comparative experiment,
iv) Removing the substrate from the respective inventive or comparative aqueous zinc passivation composition,
v) Rinsing the substrate,
vi) Drying the substrate,
   and optional
vii.b), Baking the substrate for 6 h at 210°C.

The temperature of the inventive and the comparative aqueous zinc passivation composition in method step iii) has been 30°C.

Method step ii) comprises the following method sub-steps for the inventive experiments:
a) Providing a first aqueous solution comprising chromium (III) nitrate and oxalic acid
b) Providing a second aqueous solution having a pH value of 3 comprising colloidal silicon dioxide particles having an average diameter of 15 nm, and
c) Mixing the first and the second aqueous solution to achieve the aqueous zinc passivation composition.

Turning now to the Tables, Table 1 shows the experiments for inventive and comparative examples without the last optional baking method step vii.b).

**Table 1: Experiments without method step vii.b)**

| **Substrate** | **Composition** | **Corrosion Protection Min** | **Corrosion Protection Max** | **Optical Appearance** |
|---|---|---|---|---|
| Alkaline Zn, Barrel | Inventive | 120 h | 168 h | Good |
| Alkaline Zn, Barrel | Comparative | 48 h | 96 h | Good |
| Acid Zn, Barrel | Inventive | 96 h | 144 h | Good |
| Acid Zn, Barrel | Comparative | 48 h | 96 h | Good |
| Alkaline Zn, Rack | Inventive | 120 h | 168 h | Good |
| Alkaline Zn, Rack | Comparative | 72 h | 120 h | Good |
| Acid Zn, Rack | Inventive | 96 h | 144 h | Good |
| Acid Zn, Rack | Comparative | 72 h | 120 h | Good |

As can be derived from the results of the experiments outlined above in Table 1, all provided substrates independent of their origin of the zinc surface, which has to be passivated, exhibit a stable identical optical appearance without any changes. However, the corrosion protection properties differ remarkably between the inventive experiments and the comparative experiments. The minimal corrosion protection hours wherein no white rust arises are always higher than in the identical comparative experiments which are making use of aqueous zinc passivation compositions without a source of silicon dioxide particles. The same applies for the maximal corrosion protection hours. The substrates have been varied in such a manner that always a pair of experiments has been executed, once inventive and once comparative. This proves that the inventive method and composition shows remarkable good results regardless of the origin of the zinc surface (alkaline or acidic; barrel or rack electrolytic plating).

Table 2 shows conducted experiments for inventive and comparative examples with the last optional baking method step vii.b).

**Table 2: Experiments with method step vii.b)**

| **Substrate** | **Composition** | **Corrosion Protection Min** | **Corrosion Protection Max** | **Optical Appearance** |
|---|---|---|---|---|
| Alkaline Zn, Barrel | Inventive | 96 h | 144 h | Good |
| Alkaline Zn, Barrel | Comparative | 24 h | 72 h | Bad |
| Acid Zn, Barrel | Inventive | 72 h | 120 h | Good |
| Acid Zn, Barrel | Comparative | 24 h | 72 h | Bad |
| Alkaline Zn, Rack | Inventive | 96 h | 144 h | Good |
| Alkaline Zn, Rack | Comparative | 48 h | 96 h | Bad |
| Acid Zn, Rack | Inventive | 72 h | 120 h | Good |
| Acid Zn, Rack | Comparative | 48 h | 96 h | Bad |

The results of the experiments outlined above in Table 2 exhibit that all comparative experiments led to an undesired change of their optical appearance in form of getting black. All inventive experiments have been successfully kept their good optical appearance.

The corrosion protection properties differ again remarkably between the inventive experiments and the comparative experiments. The minimal corrosion protection hours wherein no white rust arises are always higher than in the identical comparative experiments which are making use of aqueous zinc passivation compositions without a source of silicon dioxide particles. The same applies for the maximal corrosion protection hours. The substrates have been again varied in such a manner that always a pair of experiments has been executed, once inventive and once comparative. This proves again that the inventive method and composition shows remarkable good results regardless of the origin of the zinc surface (alkaline or acidic; barrel or rack electrolytic plating).

There are still two phenomena to mention. First, the total values of corrosion protection (Min or Max) are always lower if optional method step vii.b) has been conducted. However, as it is derivable from the comparative experiments using a standard aqueous passivate without silicon dioxide particles, it has been impossible up to now to keep the required optical appearance while still having good corrosion protection properties if such a baking step has been executed. So, even if the total hours of corrosion protection are lower than in the experiments shown in Table 1, the technical effect of the invention is still clearly demonstrated.

The corrosion protection hour differences shown between alkaline Zn and acid Zn are supposedly caused by the known different structure of such a zinc layer on a substrate in dependence of the electrolytic method of depositing it. Alkaline electrolytic zinc layers are known to possess a columnar structure while acidic electrolytic zinc layers are known to possess a randomly distributed structure.

While the principles of the invention have been explained in relation to certain particular embodiments, and are provided for purposes of illustration, it is to be understood that various modifications thereof will become apparent to those skilled in the art upon reading the specification. Therefore, it is to be understood that the invention disclosed herein is intended to cover such modifications as fall within the scope of the appended claims. The scope of the invention is limited only by the scope of the appended claims.

## Claims

1. Aqueous zinc passivation composition comprising
i) a chromium (III) ion source
ii) a nitrate ion source
iii) a complexing agent for the chromium (III) ion source, and
iv) a colloidal silicon dioxide particle source;
wherein said aqueous zinc passivation composition is essentially free of cobalt ions.

2. Aqueous zinc passivation composition according to claim 1 **characterized in that** the aqueous zinc passivation composition comprises chromium (III) oxalate and/or a mixture of a chromium(III) salt with oxalic acid, preferably chromium (III) nitrate and oxalic acid.

3. Aqueous zinc passivation composition according to claim 1 or 2 **characterized in that** the chromium (III) ion concentration in the aqueous zinc passivation composition is ranging from 1 to 50 g/l, preferably from 1.5 to 25 g/l, and more preferably from 1.8 to 12 g/l.

4. Aqueous zinc passivation composition according to one of the preceding claims **characterized in that** the aqueous zinc passivation composition is essentially free of fluoride ions.

5. Aqueous zinc passivation composition according to one of the preceding claims **characterized in that** the colloidal silicon dioxide particle concentration in the aqueous zinc passivation composition is ranging from 0.5 to 25 g/l, preferably from 1 to 15 g/l, and more preferably from 1.2 to 10 g/l.

6. Aqueous zinc passivation composition according to one of the preceding claims **characterized in that** the average diameter of the colloidal silicon dioxide particles is ranging from 8 to 35 nm, preferably from 10 to 25 nm, and more preferably from 12 to 21 nm.

7. Aqueous zinc passivation composition according to one of the preceding claims **characterized in that** the pH value of the aqueous zinc passivation composition is ranging from 1 to 5, preferably from 1.4 to 4, and more preferably from 1.7 to 2.6.

8. Method for passivation of a zinc surface using an aqueous zinc passivation composition according to one of the preceding claims **characterized by** the following method steps:
i) Providing a substrate having at least on one side a zinc surface,
ii) Providing an aqueous zinc passivation composition according to one of the preceding claims,
iii) Bringing the substrate into contact with said aqueous zinc passivation composition,
iv) Removing the substrate from the aqueous zinc passivation composition,
v) Rinsing the substrate, and
vi) Drying the substrate.

9. Method according to claim 8 **characterized in that** in method step iii) the substrate is brought into contact with the aqueous zinc passivation composition according to one of the preceding claims for a time period ranging from 30 to 90 s, preferably from 40 to 75 s, and more preferably from 50 to 65 s.

10. Method according to claim 8 or 9 **characterized in that** the temperature of the aqueous zinc passivation composition in method step iii) ranges from 20 to 40°C, preferably from 25 to 35°C, and more preferably from 28 to 32°C.

11. Method according to one of claims 8 to 10 **characterized in that** method step ii) comprises the following method sub-steps:
a) Providing a first aqueous solution comprising
I) a chromium (III) ion source,
II) a nitrate ion source,
III) a complexing agent for the chromium (III) ion source,
b) Providing a second aqueous solution comprising colloidal silicon dioxide particles, and
c) Mixing the first and the second aqueous solution to achieve the aqueous zinc passivation composition.

12. Method according to claim 11 **characterized in that** the pH value of the second aqueous solution comprising said colloidal silicon dioxide particles is ranging from 1 to 6.5, preferably from 2 to 5, and more preferably from 3 to 4.

13. Method according to one of claims 8 to 12 **characterized in that** the method comprises an additional method step vii.a), which is subsequently following method step vi), wherein the substrate having on the zinc surface a passivation layer additionally receives a top layer based on a sealer.

14. Method according to one of claims 8 to 12 **characterized in that** the method comprises an additional method step vii.b), which is subsequently following method step vi), wherein a baking step is executed for the substrate having on the zinc surface a passivation layer, wherein the baking step is preferably executed for a time period ranging from 1 h to 30 h at a temperature ranging from 80°C to 250°C, more preferably for a time period ranging from 3 h to 25 h at a temperature ranging from 100°C to 220°C, and most preferred for a time period ranging from 5 h to 10 h at a temperature ranging from 170°C to 220°C.

15. Metallic device element having at least a zinc surface, which has been passivated by a method for passivation of a zinc surface according to one of claims 8 to 14.
